# EUROPEAN PATENT SPECIFICATION

(11) **EP 3 148 683 B1**
(45) Date of publication and mention of the grant of the patent: **18.03.2020**
(21) Application number: 15734449.0
(22) Date of filing: 28.05.2015
(51) Int. Cl.: B01F 13/06, B09B 3/00, C02F 1/02, C02F 11/12, F26B 5/04

(54) **METHOD FOR TRANSFORMING WASTE AND SYSTEM FOR PERFORMING SAID METHOD**
VERFAHREN ZUR UMFORMUNG VON ABFALL UND SYSTEM ZUR DURCHFÜHRUNG DES BESAGTEN VERFAHRENS
PROCÉDÉ DE TRANSFORMATION DE DÉCHETS ET SYSTÈME DE MISE EN OEUVRE DUDIT PROCÉDÉ

(30) Priority: 29.05.2014 IT MI20140999
(43) Date of publication of application: 05.04.2017
(73) Proprietor: THEMIS S.r.l., 20124 Milano (IT)
(72) Inventor: ROMANO', Michele, I-20025 Legnano (Milano) (IT); ROMANO', Mauro, I-20025 Legnano (Milano) (IT)
(74) Representative: Rossetti, Elena
(86) International application number: PCT/IB2015/054017
(87) International publication number: WO 2015/181769

(56) References cited:
- WO-A1-00/52405
- US-A- 4 856 203
- US-A- 4 882 851
- US-A1- 2010 132 210
- US-B1- 7 001 629

## Description

The present invention refers to a method for concentrating and/or stabilizing and/or converting waste and/or products having an organic/inorganic matrix in a product that is directly reusable, for example a fertilizer or a biomass. The present invention also refers to a system for implementing said method.

The disposal of waste, for example sludges from treatment plants, having an organic and/or inorganic matrix, the organic fraction of waste originating from cafeterias, restaurants or supermarkets, waste from agri-food production or farming, constitutes a social/environmental problem of deep concern to the public. Companies that invest considerable capital for waste disposal are particularly sensitive to this problem.

The prospects are certainly not the best for firms, owing to the increased severity of the regulations that will force all to increase the balance sheet items related to the costs foreseen for waste management and disposal. There are currently numerous methods for converting waste and they are constantly being developed further with the aim of constantly reducing the costs, time and above all, the emission of pollutants associated with the waste disposal process.

In fact, one of the most significant problems associated with waste disposal concerns the emission of pollutants, especially environmental pollutants, as well as the bad odours resulting from waste treatment.

Therefore, there is still a deep-felt need to develop a method that can improve waste disposal in terms of time, costs and the pollution produced. The present invention resolves the technical problems stated above with a method that concentrates, stabilizes and converts waste and/or products having an organic/inorganic matrix, in a manner that is rapid, involves low energy expenditure and without the emission of pollutants. For example, waste having an organic matrix can be concentrated, stabilized and converted into a reusable material, generally as a biomass or fertilizing substrate, e.g. as an amendment.

US2010/132210 A1 discloses a method for drying organic matter such as kitchen and food wastes, comprising: dehydrating a sample in a mixing chamber under vacuum, for example at a reduced pressure between 100 and 2 mb, while heating it with microwaves to e.g. 80°C; and condensing the released vapour.

In particular, the Applicant has developed a method, which by permitting evaporation at a low temperature (about 65°C) of the water contained in the waste and/or products having an organic/inorganic matrix under high vacuum conditions and treating the latter with a source of microwaves, makes it possible to obtain an end product that is directly reusable and characterized by a markedly reduced volume compared to the initial volume of the material treated, in a short time, with little energy being required and without releasing pollutants in the environment.

The present invention also discloses a plant system for performing this method and comprising a low-cost heat source in terms of energy consumption; a reaction chamber that receives the organic/inorganic matrix waste and/or products to be treated and that comprises a jacket for heating the reaction chamber by means of the heat source, a source of microwaves and a system for mixing and/or shredding the material to be treated; a vacuum system connected to the reaction chamber and enabling high vacuum conditions to be realized inside the reaction chamber; and a vapour condenser.

The method of the present invention advantageously affords a reduction in the volume of the treated mass of waste of up to 90% of the initial volume. At the same time, the method of the present invention enables the abatement of bad odours generally associated with waste disposal.

Moreover, the product obtained at the end of the method of the present invention is readily reusable. For example, starting with organic material, it is possible to obtain a product capable of improving soil, in terms of quality, and the crop yield, in terms of quantity, and thus utilizable as a fertilizer.

Alternatively, the product obtained at the end of the method can be used as a biomass for directly supplying combustion systems.

Therefore, in addition to being compact and reduced in volume, the product obtained at the end of the method of the present invention is odourless, stable and has a relative moisture content that can be calibrated according to requirements for use.

It follows that application of the method of the present invention does not cause environmental pollution. In fact, it does not produce residual waste, wastewater or the emission of gases/vapours. It exclusively produces aqueous vapour that is condensed and treated or recycled prior to disposal carried out by means of a system with low energy impact.

Lastly, further significant advantages of the method of the present invention concern the fact that conversion of the material is carried out in the span of a few hours (about 2-3 hours) and the conversion plant system requires low costs as relates to production, management and maintenance.

The characteristics and advantages of the method and the plant system constituting the object of the present invention will emerge more clearly from the detailed description and from the examples of embodiments provided below also with the aid of the attached drawing.

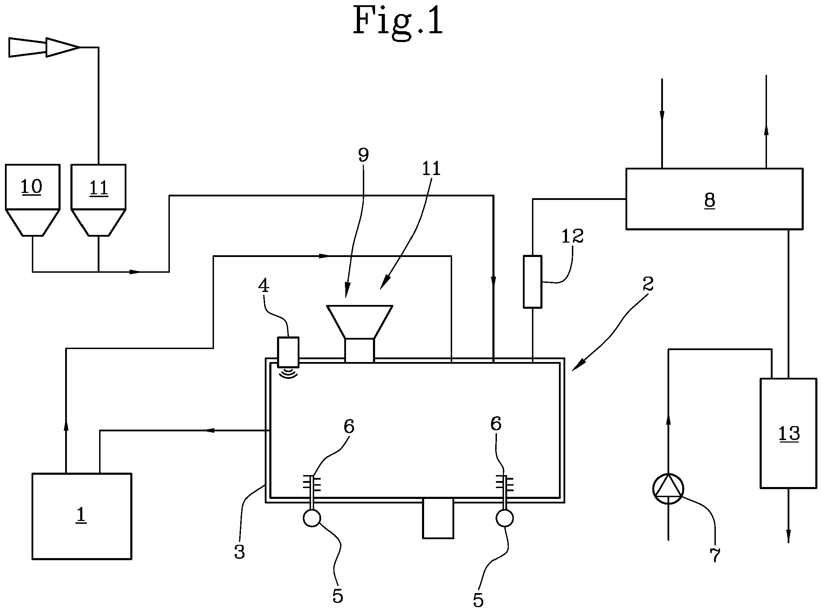

- Figure 1 is a simplified diagram of the plant constituting the object of the present invention.

The method of present invention for concentrating, stabilizing and converting waste and/or products having an organic/inorganic matrix and a degree of dryness of up to 50%, comprises:
(i) A step of dehydration, stabilization and conversion of the waste and/or products having an organic/inorganic matrix, said step being realized in a reaction chamber under high vacuum conditions, where said waste and/or said products having an organic matrix are mixed and shredded at the same time in a mixer comprising motorized blades positioned on the cladding of the reaction chamber, heated uniformly to a temperature of 60-70°C and subjected to microwave treatment utilizing microwaves of 2-4 kW, thereby reducing the volume of the organic/ inorganic matrix waste and/or product by 50-90% compared to the original volume, said step lasting for a maximum of 2-3 hours; and
(ii) A step of condensation of the vapour that is released during step (i).

In the context of the present invention the term waste is understood as scrap materials of organic and inorganic origin. For example, the waste that can be treated using the method of the present invention comprises the organic fraction of urban and extra-urban solid waste, waste from agri-food production or farming, waste from meat or fish processing, anaerobic biodigestates, animal fats and correlated products, organic and inorganic sludges originating from treatment plants, industrial sludges or in general matrices that contain a significant water content. The waste is preferably shredded waste.

In the context of the present invention, the term concentration of waste and/or of products having an organic/inorganic matrix is understood as the reduction in volume thereof, which preferably takes place by means of low-temperature dehydration of such waste and/or products. In particular, in this context, the waste and/or products having an organic matrix are dehydrated by evaporating the water contained therein at a temperature ranging from 60 to 70°C, preferably at about 65°C. In fact, low-temperature evaporation of the water can be achieved because the reaction chamber operates under high vacuum conditions.

In the context of the present invention, the conversion of waste and/or products having an organic/inorganic matrix is understood as the entire set of physical, chemical and biological conversions to which the treated waste and/or product having an organic matrix is subjected based on the treatment and/or the possible addition of process additives and/ structurants. For example these conversions consist of: the reduction of the fermentability of the organic matter (that is, the reduction of the fermentation ability of the spontaneous organic matter), the increase in the lower calorific value of the concentrated treated matter, the reduction of the bacterial count and/or pathogens, the breaking down of the macromolecules and/or organic chains into molecules of smaller size owing for example to chemical treatment (additives/structurants), physical treatment (temperature of 60-70°C) or mechanical treatment (shredding and/or structurants).

In the context of the present invention, stabilization of waste and/or products having an organic/inorganic matrix is essentially understood as the process of microbial abatement in such waste and/or products.

Step (i) is performed in a reaction chamber kept under high vacuum conditions. Preferably, the vacuum is realized using a pump, preferably a liquid ring pump, or a compression system, a Venturi system or a direct connection to a possible pre-existing vacuum line. Preferably, prior to realizing the high vacuum conditions inside the reaction chamber, the reaction chamber is heated (that is, brought to a temperature of 60-70°C) by means of a working fluid, preferably utilizing an external low-cost heat source in terms of energy consumption. In particular, the external heat source can consist of a heat generator for generating heat ex novo or the heat source comprises an enthalpy tail, that is, the heat source comprises recovered heat, for example from waste heat constituted by cooling water at about 60-90°C, preferably at about 90°C, remaining vapour, hot water from cooling motors, condensate return from the vapour lines, for example waste vapour, diathermic oil or fumes from combustion processes/endothermic engines/cogeneration systems.

The heat source is circulated inside a jacket that completely or partly encloses the reaction chamber.

Owing to the heat yielded by the heat source inside the reaction chamber, temperature conditions are realized, varying from 60 to 70°C, and are sufficient to enable evaporation of the water contained in the mass of material to be treated. In fact, under high vacuum conditions, the boiling point is lowered to about 60-65°C and therefore less "noble" heat sources can also be utilized, which without the vacuum could not be used as an energy source.

In any case, should it be necessary to generate the heat ex novo because, for example, enthalpy tails are not available, the energy consumption levels would be limited in any case because the heat source temperatures required under these operating conditions are lower (60-70°C, not 100°C) and, in addition, the greater heat delta would increase and speed up the transfer of heat.

Moreover, given that the reaction chamber is under vacuum conditions and therefore does not communicate with the atmosphere, there are no malodorous emissions during treatment of waste and/or products having an organic matrix.

Lastly, the reduction of the operating temperatures also minimizes corrosion phenomena affecting the plant, thereby making it possible to increase the mean life of the plant and to reduce maintenance.

During step (i) of the method of the present invention, it is possible to add additives and/or structuring agents to the organic/inorganic matrix waste and/or products inside the reaction chamber. The additives and/or structuring agents are preferably added before step (i) is begun, that is, suitable amounts of an additive and/or re-structuring agent are added to the mass of organic/inorganic matrix waste and/or products to be treated. Therefore, the mass to be treated also containing additives and/or structuring agents is directed into the reaction chamber. The additives and/or structuring agents can possibly be added directly into the reaction chamber containing the material to be treated. The chamber is then brought to a temperature ranging between 60 and 70°C, preferably about 65°C, utilizing the heat yielded by the heat source. Once the desired temperature has been reached, the high vacuum conditions are created inside the reaction chamber.

The purpose of the additives and/or structuring agents is to facilitate the achievement of a stable, odourless product by reducing the bacterial count and pathogens, and thus create a product with characteristics suitable for reuse.

The selection and amount of additives/structuring agents are both strictly correlated with the materials that have to be treated and/or the end product that one wishes to obtain.

For example, in the case of waste having an organic matrix, the added additive is based on natural substances and is selected each time based on the organic matrix entering the reaction chamber and according to the desired post-treatment product.

The thickening agent is preferably selected from among: wood, sand, ashes and structurants in general.

During step (i), the material to be treated is mixed, preferably by means of a mixer unit equipped with a thermostat, more preferably a jacketed horizontal mixer.

Mixing is performed preferably at a variable speed depending on the type of material to be treated. For example, for organic waste it varies between 10 and 500 revolutions per minute, preferably between 10 and 100 revolutions per minute and more preferably between 10 and 60 revolutions per minute.

The mixer preferably comprises means for shredding the material to be treated, for example motorized blades that are preferably positioned on the cladding of the reaction chamber, and this means enables the material to be treated to be mixed and shredded at the same time. The material to be treated can possibly reach the reaction chamber for treatment already shredded, or it may not need to be shredded as in the case of some sludges for example.

During step (i), the material to be treated is brought to the temperature of the reaction chamber, that is, to about 60-70°C, preferably to about 65°C. As specified above, heating takes place owing to a heat source that heats the reaction chamber preferably passing through a jacket that encloses the chamber. This heating process enables evaporation of the water contained in the organic matrix waste and/or products to be treated. The heating process is also facilitated by the microwave treatment of the mass. The microwave treatment, possibly together with the additives, also enables the reduction of microorganisms present in the material to be treated and as a result it reduces the emission of bad odours.

Operation of the microwave system is preferably of a discontinuous type.

The microwaves utilized are preferably of 2-4 Kw, preferably of about 3 Kw.

Step (i) represents the essential step of the treatment method. In fact, at the end of step (i) a finished product is recovered and it can be re-utilized immediately without further processing. The type of re-utilization highly depends on the initial material that undergoes treatment. For example, in the case of organic waste, the finished product can be directly used as a fertilizer.

In any case, at the end of step (i), the organic/inorganic matrix products are dehydrated, stabilized and converted, and the volume thereof is reduced by about 50-90% compared to the original volume. Therefore, even in the case in which it cannot be reused directly, one obtains a quantity of waste for disposal that is reduced by 50-90% compared to the original volume. This leads to an enormous advantage, economically speaking, for firms as they have to dispose of a markedly smaller volume of waste, in the possible case of a finished product that cannot be re-utilized directly.

The duration of the method of the present invention and particularly the duration of step (i) depends on the dimensions of the plant and the heat source utilized. In any case, step (i) lasts for a maximum of 2-3 hours.

As stated previously, during step (i) the water contained in the material undergoing treatment evaporates. In general, the vapour originating from the reaction chamber is not discharged into the atmosphere. It is directed into a condenser, possibly after filtration and where it is condensed and returned in liquid form.

The treatment of vapours involves lower costs so that from this point of view, the method of the present invention is very advantageous. Moreover, the method of the present invention does not comprise emission of vapour into the atmosphere and therefore the impact on the environment is lower.

The liquids (virtually water) obtained from the condensation step can be reused, for example recycled, or they can be re-utilized following treatment. As the condensation liquid is substantially free of suspended solids and salts (in that it originates from an evaporation step), any post-treatment proves to be very easily managed using well-established techniques of the prior art.

The liquid obtained can be re-utilized for example in in-house processes of the production site, such as washing surfaces, washing vehicles, replenishing tower and/or cooling water, subject to possible treatment, including for example passage through an active carbon column and/or membrane filtration or cavitation.

The condensation process can possibly be carried out using evaporative cooling tower water and/or water from a chilling circuit, that is, the cooling water circuits (tower and/or chilling circuit water) that can be connected to the plant system of the present invention, thereby simplifying installation and reducing investment and management costs.

All of the operations of the method of the present invention are set and regulated in real time by means of specific predictive type of software.

In other words, using this software it is possible to set and monitor in real time all the process operations and parameters, which can be graphically displayed and stored in an archive.

Therefore, the method of the present invention is also advantageous because it can be monitored in real time and the treatment parameters thereof can be modified based on the course of the treatment so as to optimize and make the yield as efficient as possible.

A plant for realizing the method disclosed hereinabove is also disclosed, said plant comprising:
- A low-cost heat source (1) in terms of energy consumption;
- A reaction chamber (2) suitable for receiving organic/inorganic matrix waste and/or products to be treated and provided with a jacket (3) that enables circulation of the heat source therein, said reaction chamber further comprising a source of microwaves (4) and a system for mixing and/or shredding (5, 6) the organic/inorganic matrix waste and/or products to be treated;
- A vacuum system (7) connected to the reaction chamber enabling high vacuum conditions to be realized inside the reaction chamber; and
- A vapour condenser (8).

Step (i) of the method takes place inside the reaction chamber (2).

The organic/inorganic matrix waste and/or products to be treated are directed into the reaction chamber (2) through a hopper (9). Additives (10) and/or structuring agents (11) can be added to the waste and/or products according to the nature of the material to be treated.

The heat source (1) is preferably external to the reaction chamber (2) and it can comprise a heat generator for generating heat ex novo. In the most advantageous embodiments of the invention the heat source comprises an enthalpy tail, that is, the heat source comprises recovered heat. The recovered heat is preferably waste heat comprising cooling water at about 90°C, remaining vapour, hot water from cooling motors, condensate return from the vapour lines, for example waste vapour, diathermic oil or fumes from combustion processes/endothermic engines/cogeneration systems. The heat source (1) is circulated inside the jacket (3) that completely or partly encloses the reaction chamber, and in this manner the temperature of the reaction chamber (2) is brought to 60-70°C, preferably to about 65°C, with the heat yielded by the heat source.

The temperature is also maintained owing to the microwave system (4), which also has the aim of abating the microbial count of the waste to be treated, that is, the aim of stabilizing it. Once the temperature has been reached inside the reaction chamber, the high vacuum conditions are created by means of the vacuum system (7).

Preferably, the vacuum system (7) consists of a pump, preferably a liquid ring pump, a compression system, a Venturi system or a direct connection to a possible pre-existing vacuum line.

The material being treated in the reaction chamber is mixed by means of a mixing system comprising a series of mixers (5) equipped with blades (6), preferably motorized, so that the waste can be mixed and shredded at the same time.

Owing to the combination of high vacuum conditions, microwaves and a temperature of about 60-70°C, during step (i) the water present within the material being treated evaporates, the microwaves and the temperature stabilize the material, reducing the microbial count thereof and the temperature, possibly also the additives and/or structuring agents, converts it.

At the end of the process, a finished product is collected that is dehydrated, stabilized, converted and that can be reused.

The vapour that is generated in the reaction chamber under vacuum conditions during step (i) of the method of the present invention is directed, possibly through a filter (12), into the condenser (8), which provides for converting the vapour into a liquid, which is, in turn, collected in a tank (13) ready to be treated or recycled, for example in the plant itself.

For the purposes of further validation of the method of the present invention, trials were conducted on:
- sludges of biological origin, with a degree of dryness of about 2%
- sludges of biological origin, with a degree of dryness of about 20%
- sludges of biological origin, with a degree of dryness of about 25 - 30%
- sludges of chemical origin, with a degree of dryness of about 50%
- sludges of inorganic origin (fluorite sludges), with a degree of dryness of about 50%.

The degree of dryness is understood as the percentage of total solids contained in the sludge, the solids being of organic or inorganic origin.

These trials were specifically carried out on very "liquid" matrices (2% degree of dryness), partially pre-treated matrices (20 - 30% dryness) and matrices intensely pre-treated by mechanical means (50% dryness), for the purpose of verifying the functional and performance-related aspects of the technology under the various conditions.

In particular, assessing the achievable performance levels proved to be of interest, starting from matrices with a degree of dryness equal to or higher than 30%, in which:
- the residual water in the matrix is principally found in a "bound" form and not as "free surface water" and it is thus harder to remove using conventional technology;
- the matrix is found already in an aggregate and substantially semisolid form, therefore with the need for a particularly reliable and mechanically sturdy mixing and crushing system.

The assessment of performance levels was carried out:
- in relation to the functional aspects, with particular reference to the effectiveness of the mixing system;
- in relation to performance-related aspects, that is, to the production output of the system over time, the characteristics of the end product (dried sludge) and the quality of the condensed vapour.

The technology proved to be capable of effectively treating matrices with a low content of dry matter and matrices with varying degrees of dryness of up to 50%, as explained previously hereinabove.

In particular, production output (litres of evaporated water/unit of time) proved to be constant during the step of removal of the "free" water (approximately up to a degree of dryness of 50%) and during the step of removal of the water in a bound form (degree of dryness approximately exceeding 50%).

For the reasons stated hereinabove, performance (litres of evaporated water/hour) obviously declined with degrees of dryness > 50%. However,:
- the decline in performance remained within interesting limits (20 - 30%)
- though reduced when the degree of dryness was > 50%, production output proved to be stable even with extremely high degrees of dryness, beyond which the presence of "residual" water in the sludge
was virtually equal to zero and production output inevitably "plunged". As mentioned above, several matrices (organic, chemical, and biological) varying in content of dry matter were tested.

Under similar conditions of dryness, the technology revealed identical performance levels - a particularly reassuring result also in terms of a potential scaling-up of the system to an industrial level.

During the process of drying the principal matrices, there is a step called the "plastic" step (degree of dryness of about 60%). In this step, the matrix takes on a semi-plastic consistency, resulting in considerable problems with mixing and the heat exchange.

In this case as well, the particular geometry of the mixing system (main mixer associated with the lateral "blade" mixers) prevented agglomeration, making it possible to maintain the production output of the system unaltered.

The mixing system offered interesting results also in terms of (electric) energy consumption levels: with the exception of the processing time of the so-called "plastic" step, during which the mixing system absorbs all of the installed power for the purpose of maintaining the performance levels, the consumption of electricity was almost negligible with respect to the installed electric power.

As regards the characteristics of the dried sludge, degrees of dryness exceeding 95% were reached, without issues of any kind, compared to degrees of dryness of 80% - 85% that can be reached by conventional "low temperature" systems. The calorific value of the dry residue obtained is also interesting, as is the particle size distribution, which enables manageable combustion thereof in cement plants.

Beyond the level of 95%, the production output of the system dropped significantly, owing to the substantial "absence" of residual water in the matrix already dried to a very great degree.

The quality of the water originating from condensation of the vapour represents another salient element. The content of residual pollutants was decidedly limited, particularly with reference to the nitrogen components, which constitute a problem for any treatment system. The low content of residual pollutants undoubtedly enables the recirculation thereof to the treatment plant that gave rise to the sludge, and where they will be treated prior to release in the environment.

Overall, the pilot trials confirmed all of the hypotheses of the project:
- the possibility of utilizing enthalpy tails at low temperatures;
- system performance constancy and repeatability, with the degree of dryness being equal on different matrices, even in the transition steps in the "plastic" state of the matrices;
- reliability and efficiency of the mixing system, even under the most critical conditions ("plastic" state of the matrix);
- high quality (degree of dryness, calorific value and uniform particle size distribution) of the dried product;
- negligible presence of pollutants - particularly with reference to the nitrogenous forms - in the water originating from condensation of the vapour.

## Claims

1. A method for concentrating, stabilizing and converting waste and/or products having an organic/inorganic matrix and a degree of dryness of up to 50%, comprising:
(i) A step of dehydration, stabilization and conversion of the waste and/or products having an organic/inorganic matrix, said step being realized in a reaction chamber under high vacuum conditions, where said waste and/or said products having an organic matrix are mixed and shredded at the same time in a mixer comprising motorized blades positioned on the cladding of the reaction chamber, heated uniformly to a temperature of 60-70°C and subjected to microwave treatment utilizing microwaves of 2-4 kW, thereby reducing the volume of the organic/inorganic matrix waste and/or product by 50-90% compared to the original volume,
said step lasting for a maximum of 2-3 hours; and
(ii) A step of condensation of the vapour that is released during step (i).

2. The method according to claim 1, wherein the waste comprises scrap materials of organic origin and/or inorganic origin; the waste is selected preferably from among: the organic fraction of urban and extra-urban solid waste, waste from agri-food production or farming, waste from meat or fish processing, anaerobic biodigestates, animal fats and correlated products, organic and inorganic sludges originating from treatment plants, industrial sludges and in general matrices that contain a significant water content.

3. The method according to claim 1 or 2, wherein said reaction chamber is brought to a temperature of 60-70°C using a heat source having a low energy expenditure.

4. The method according to any one of claims 1-3, wherein said heat source comprises a heat generator or an enthalpy tail, preferably of recovered heat, preferably heat recovered from cooling water at about 60-90°C, remaining vapour, hot water from cooling motors, condensate return from the vapour lines, for example waste vapour, diathermic oil or fumes from combustion processes/endothermic engines/cogeneration systems.

5. The method according to any one of claims 1-4, wherein said heat source is circulated in a jacket that completely or partially encloses the reaction chamber.

6. The method according to any one of claims 1-5, wherein the microwave treatment is of the discontinuous type.

7. The method according to any one of claims 1-6, wherein step (i) further comprsises adding additives and/or structuring agents to the organic/inorganic matrix waste and/or products to be treated.

8. The method according to claim 7, wherein the structuring agent is selected from among: wood, sand, ashes and structurants in general.

9. The method according to any one of claims 1-8, wherein said vapour is filtered before being condensed.

10. The method according to any one of claims 1-9, wherein dehydration according to step (i) comprises a reduction of as much as 90% of the initial volume of the treated organic/inorganic matrix waste and/or products.

11. The method according to any one of claims 1-10, wherein the conversion according to step (i) comprises a reduction of the fermentability of the organic matter, an increase in the lower calorific value of the concentrated treated matter, and a breaking down of the macromolecules and/or organic chains of the treated organic matrix waste and/or products into molecules of smaller size.

12. The method according to any one of claims 1-11, wherein stabilization according to step (i) comprises a reduction of the microbial count of the treated organic/inorganic matrix waste and/or products.

13. The method according to any one of claims 1-12, wherein the high vacuum in the reaction chamber is realized by means of a pump, preferably a liquid ring pump, a compression system, a Venturi system or a direct connection to a possible pre-existing vacuum line.

14. The method according to any one of claims 1-13, wherein said condensed vapour is collected and preferably recycled.

## Patentansprüche

1. Verfahren zum Konzentrieren, Stabilisieren und Umwandeln von Abfall und/oder Produkten, aufweisend eine organische/anorganische Matrix und einen Trockenheitsgrad von bis zu 50 %, umfassend:
(i) einen Schritt zum Dehydrieren, Stabilisieren und Umwandeln des Abfalls und/oder der Produkte, aufweisend eine organische/anorganische Matrix, wobei dieser Schritt in einer Reaktionskammer unter Hochvakuumbedingungen durchgeführt wird, wobei der Abfall und/oder die Produkte eine organische Matrix aufweisen und gleichzeitig in einem Mischer vermischt und zerkleinert werden, umfassend motorbetriebene Messer, positioniert an der Verkleidung der Reaktionskammer, gleichförmig erhitzt auf eine Temperatur von 60-70 °C und einer Mikrowellenbehandlung unterzogen unter Nutzung von Mikrowellen zu 2-4 kW, wodurch das Volumen des Abfalls und/oder Produkts mit organischer/anorganischer Matrix im Vergleich zum ursprünglichen Volumen um 50-90 % reduziert wird, wobei dieser Schritt maximal 2-3 Std. lang dauert, und
(ii) einen Schritt zum Verflüssigen des Dampfs, der während des Schritts (i) freigesetzt wird.

2. Verfahren nach Anspruch 1, wobei der Abfall Ausschussmaterialien organischer Herkunft und/oder anorganischer Herkunft umfasst, wobei der Abfall vorzugsweise ausgewählt wird aus dem organischen Teil von festem städtischem und außerstädtischem Abfall, Abfall aus der Herstellung von Agrar-/Lebensmittelprodukten oder aus der Landwirtschaft, Abfall aus der Fleisch- oder Fischverarbeitung, anaeroben Vergärungsprodukten, tierischen Fetten und korrelierten Produkten, organischen und anorganischen Schlämmen aus Behandlungsanlagen, Industrieschlämmen und im Allgemeinen Matrizes, die einen erheblichen Wasseranteil enthalten.

3. Verfahren nach Anspruch 1 oder 2, wobei die Reaktionskammer auf eine Temperatur von 60-70 °C unter Nutzung einer Wärmequelle erwärmt wird, die einen niedrigen Energieaufwand aufweist.

4. Verfahren nach einem der Ansprüche 1-3, wobei die Wärmequelle einen Wärmegenerator oder einen Enthalpieauslauf aufweist, vorzugsweise von rückgewonnener Wärme, vorzugsweise von Wärme, die aus Kühlwasser bei ungefähr 60-90 °C, Restdampf, Heißwasser als Kühlungsmotoren, Kondensatrücklauf aus den Dampfleitungen rückgewonnen wurde, beispielsweise Abfalldampf, diathermisches Öl oder Rauchgase aus Verbrennungsprozessen/Verbrennungsmotoren/Kraft-Wärme-Kopplungssystemen.

5. Verfahren nach einem der Ansprüche 1-4, wobei die Wärmequelle in einem Mantel in Zirkulation versetzt wird, der die Reaktionskammer vollständig oder teilweise umhüllt.

6. Verfahren nach einem der Ansprüche 1-5, wobei die Mikrowellenbehandlung vom diskontinuierlichen Typ ist.

7. Verfahren nach einem der Ansprüche 1-6, wobei Schritt (i) zudem das Hinzufügen von Zusatzstoffen und/oder strukturbildenden Mitteln zum Abfall und/oder zu den Produkten mit organischer/anorganischer Matrix, die zu behandeln sind, umfasst.

8. Verfahren nach Anspruch 7, wobei das strukturbildende Mittel aus Holz, Sand, Asche und Strukturbildnern im Allgemeinen ausgewählt ist.

9. Verfahren nach einem der Ansprüche 1-8, wobei der Dampf vor der Verflüssigung gefiltert wird.

10. Verfahren nach einem der Ansprüche 1-9, wobei das Dehydrieren nach Schritt (i) eine Reduzierung von so gut wie 90 % des anfänglichen Volumens des behandelten Abfalls und/oder der behandelten Produkte mit organischer/anorganischer Matrix umfasst.

11. Verfahren nach einem der Ansprüche 1-10, wobei die Umwandlung nach Schritt (i) eine Reduzierung der Gärfähigkeit der organischen Substanz, eine Erhöhung der unteren Heizleistung des konzentrierten behandelten Stoffs und ein Zerbrechen der Makromoleküle und/oder organischen Ketten des behandelten Abfalls und/oder der behandelten Produkte mit organischer Matrix in Moleküle einer geringeren Größe umfasst.

12. Verfahren nach einem der Ansprüche 1-11, wobei das Stabilisieren nach Schritt (i) eine Reduzierung der Keimzahl des behandelten Abfalls und/oder der behandelten Produkte mit organischer/anorganischer Matrix umfasst.

13. Verfahren nach einem der Ansprüche 1-12, wobei das Hochvakuum in der Reaktionskammer mittels einer Pumpe, bei der es sich vorzugsweise um eine Flüssigkeitsringpumpe handelt, eines Kompressionssystems, eines Venturi-Systems oder einer direkten Verbindung mit einer etwaigen bereits bestehenden Vakuumleitung hergestellt wird.

14. Verfahren nach einem der Ansprüche 1-13, wobei der verflüssigte Dampf gesammelt und vorzugsweise wiederverwertet wird.

## Revendications

1. Procédé de concentration, de stabilisation et de conversion de déchets et/ou produits à matrice organique/inorganique et avec un degré de séchage jusqu'à 50 %, comprenant :
(i) une étape de déshydratation, de stabilisation et de conversion des déchets et/ou produits à matrice organique/inorganique, ladite étape se faisant à l'intérieur d'une chambre de réaction dans des conditions de vide poussé, où lesdits déchets et/ou lesdits produits ayant une matrice organique sont mélangés et déchiquetés simultanément dans un mélangeur comprenant des lames motorisées situé sur le revêtement de la chambre de réaction, chauffés uniformément à une température de 60-70 °C et soumis à un traitement micro-ondes en utilisant des micro-ondes de 2-4 kW, réduisant ainsi le volume du déchet et/ou produit à matrice organique/inorganique de 50-90 % par rapport au volume original, ladite étape durant 2-3 heures maximum ; et
(ii) une étape de condensation de la vapeur qui est libérée pendant l'étape (i).

2. Procédé selon la revendication 1, dans lequel les déchets comprennent des matériaux de rebut d'origine organique et/ou d'origine inorganique ; les déchets sont sélectionnés de préférence parmi : la fraction organique des déchets solides urbains et extra urbains, les déchets de la production agroalimentaire ou agricole, les déchets provenant de la transformation des viandes ou poissons, les biodigestats anaérobies, les graisses animales et produits connexes, les boues organiques et inorganiques provenant des usines de traitement, les boues industrielles et, en général, les matrices avec une teneur significative en eau.

3. Procédé selon la revendication 1 ou 2, dans lequel ladite chambre de réaction est amenée à une température de 60-70 °C à l'aide d'une source de chaleur ayant une faible consommation d'énergie.

4. Procédé selon l'une quelconque des revendications 1-3, dans lequel ladite source de chaleur comprend un générateur de chaleur ou une queue de enthalpie, de préférence de chaleur récupérée, de préférence chaleur récupérée à partir d'eau froide à 60-90 C environ, vapeur restante, eau chaude provenant de moteurs de refroidissement, retour de condensats des conduites de vapeur, par exemple vapeur d'eau, huile diathermique ou fumées des processus de combustion/moteurs endothermiques/systèmes de cogénération.

5. Procédé selon l'une quelconque des revendications 1-4, dans lequel ladite source de chaleur circule dans une chemise entourant totalement ou partiellement la chambre de réaction.

6. Procédé selon l'une quelconque des revendications 1-5, dans lequel le traitement micro-ondes est de type discontinu.

7. Procédé selon l'une quelconque des revendications 1-6, dans lequel l'étape (i) comprend l'ajout d'additifs et/ou d'agents de structuration aux déchets et/ou produits à matrice organique/inorganique à traiter.

8. Procédé selon la revendication 7, dans lequel l'agent de structuration est sélectionné parmi : bois, sable, cendres et structurants en général.

9. Procédé selon l'une quelconque des revendications 1-8, dans lequel ladite vapeur est filtrée avant sa condensation.

10. Procédé selon l'une quelconque des revendications 1-9, dans lequel la déshydratation selon l'étape (i) comprend une réduction jusqu'à 90 % du volume initial des déchets et/ou produits à matrice organique/inorganique traités.

11. Procédé selon l'une quelconque des revendications 1-10, dans lequel la conversion selon l'étape (i) comprend une réduction de la fermentabilité de la matière organique, une augmentation de la valeur calorifique plus basse de la matière traitée concentrée, et une rupture des macromolécules et/ou des chaînes organiques des déchets et/ou produits à matrice organique traités en molécules de taille plus petite.

12. Procédé selon l'une quelconque des revendications 1-11, dans lequel la stabilisation selon l'étape (i) comprend une réduction de la numération microbienne des déchets et/ou produits à matrice organique/inorganique traités.

13. Procédé selon l'une quelconque des revendications 1-12, dans lequel le vide poussé dans la chambre de réaction est réalisé à l'aide d'une pompe, de préférence une pompe à anneau liquide, un système de compression, un système Venturi ou une connexion directe à une ligne éventuelle de vide préexistante.

14. Procédé selon l'une quelconque des revendications 1-13, dans lequel ladite vapeur condensée est collectée et de préférence recyclée.
